# EUROPÄISCHE PATENTANMELDUNG

(11) **EP 4 173 788 A1**
(43) Veröffentlichungstag der Anmeldung: **03.05.2023**
(21) Anmeldenummer: 22200343.6
(22) Anmeldetag: 07.10.2022
(51) Int. Cl.: B28C 7/00, F25D 3/10, C04B 40/00, F28C 3/08, F16K 15/06, B05B 1/30, B05B 1/32

(54) **VORRICHTUNG ZUM KÜHLEN VON ZUGABEWASSER FÜR DIE HERSTELLUNG VON FRISCHBETON**

(30) Priorität: 28.10.2021 DE 102021005359
(71) Anmelder: Messer SE & Co. KGaA, 65812 Bad Soden (DE); Messer Austria GmbH, 2352 Gumpoldskirchen (AT)
(72) Erfinder: Hatz, Gottfried, 8431 Gralla (AT); Tauchmann, Jens, 47259 Duisburg (DE)

(57) **Zusammenfassung**

Eine Vorrichtung (1) zum Kühlen von Zugabewasser umfasst einen Behälter (2) zum Aufnehmen eines Flüssigkeitsbades (11), in den eine Zuleitung (7) für ein kryogenes Medium einmündet. Die Zuleitung (7) mündet an einer Eintragseinrichtung (8, 21) in das Flüssigkeitsbad (11) ein. Um zu verhindern, dass während Betriebspausen Zugabewasser aus dem Flüssigkeitsbad (11) in die Zuleitung (7) eindringt, ist die Zuleitung (7) und/oder die Eintragseinrichtung (8, 21) mit Mitteln - z.B mit einer Rückschlagarmatur (16) oder mit einer selbstschließenden Eintragsdüse (22) - zum Verhindern des Rückflusses von Zugabewasser in die Zuleitung (7) ausgerüstet.

## Beschreibung

Die Erfindung betrifft eine Vorrichtung zum Kühlen von Zugabewasser für die Herstellung von Frischbeton, mit einem Behälter zum Aufnehmen eines aus Zugabewasser bestehenden Flüssigkeitsbades und mit einer Zuleitung für ein kryogenes Medium, die mit einer in das Flüssigkeitsbad im Behälter einmündenden Eintragseinrichtung strömungsverbunden ist.

Die Temperatur von Frischbeton wird auf Grund von gesetzlichen Empfehlungen, Vorschriften und Richtlinien sowie projektgebundenen Vorgaben in vielen Ländern zunehmend begrenzt, um Temperaturspannungsrisse zu vermeiden, die die Druckfestigkeit des Betons und die Langlebigkeit des Bauwerkes mindern können. Eine Möglichkeit zur Temperaturkontrolle des Frischbetons besteht in der Kühlung des Zugabewassers, das dazu auf einen Wert von beispielsweise knapp über 0°C gebracht wird. Hierzu finden derzeit Kühlsysteme auf elektrischer Basis oder auch unter Verwendung von Flüssigstickstoff Verwendung.

Bei der Kühlung mittels eines kryogenen Kühlmediums, wie beispielsweise flüssiger Stickstoff, wird dieser entweder direkt, etwa mittels Lanzen, in die Flüssigkeit eingetragen, oder es erfolgt eine indirekte Kühlung an einer Wärmetauscherfläche eines Wärmetauschers, wobei die zu kühlende Flüssigkeit mittels Pumpen, Rührwerken oder sonstiger Agitatoren in beständige Bewegung gebracht wird, um eine möglichst gleichmäßige Kühlung der Flüssigkeit sicherzustellen und eine Vereisung der Lanze oder der Wärmetauscherfläche zu verhindern.

Die WO 2012/010705 A1 beschreibt ein Verfahren, bei dem ein kälteverflüssigtes Gas über eine Düse direkt in das zur Kühlung von Frischbeton eingesetzte Zugabewasser eingebracht wird, wobei zumindest ein Teil des Zugabewassers zu Eis gefriert.

Aus der DE 3 828 136 A1 ist bekannt, eine Flüssigkeit dadurch zu kühlen, dass ein verflüssigtes Gas über eine Düse direkt in den Bodenbereich des Behälters eingetragen wird, in dem die Flüssigkeit bevorratet wird.

Aus der EP 2 142 862 B1 ist ein Verfahren zum Kühlen von Wasser bekannt, bei dem ein kälteverflüssigtes Gas tropfenweise in das Wasser eingespritzt wird, sodass eine Suspension aus ungefrorenem und gefrorenem Wasser gebildet wird, die als Zugabewasser in der Betonherstellung eingesetzt wird.

Nachteilig bei diesen Systemen, in denen verflüssigtes Gas direkt in das Zugabewasser eingespeist wird, ist jedoch, dass es am Eintragspunkt des Gases zu Vereisungen kommt, die die Funktionsfähigkeit des Systems beeinträchtigen können. Zudem kann während einer Betriebspause Zugabewasser in die Zuleitung für das kryogene Medium eindringen und nach der erneuten Inbetriebnahme dort gefrieren, wodurch ebenfalls die Funktionsfähigkeit beeinträchtigt wird.

In der WO 2012/010705 A1 und der DE 3 828 136 A1 wird daher vorgeschlagen, durch eine thermische Isolierung oder eine Beheizung der Zuleitung bzw. des Eintragssystems der Gefahr der Eisbildung zu begegnen, was indes nur beschränkt wirksame Maßnahmen sind.

Der Erfindung liegt daher die Aufgabe zu Grunde, eine Vorrichtung zum Kühlen von Zugabewasser für die Herstellung von Frischbeton zu schaffen, bei der die Gefahr von Vereisungen gegenüber den Gegenständen nach dem Stande der Technik weiter reduziert ist.

Gelöst ist diese Aufgabe durch eine Vorrichtung mit den Merkmalen des Patentanspruchs 1. Vorteilhafte Ausgestaltungen der Erfindung sind in den Unteransprüchen angegeben.

Eine erfindungsgemäße Vorrichtung der eingangs genannten Art und Zweckbestimmung ist also dadurch gekennzeichnet, dass die Zuleitung und/oder die Eintragseinrichtung mit Mitteln zum Verhindern einer Rückströmung von Zugabewasser aus dem Flüssigkeitsbad in die Zuleitung ausgerüstet ist.

Erfindungsgemäß wird also das kryogene Medium direkt in das Flüssigkeitsbad des Zugabewassers im Behälter eingespeist. Die Zuführung des kryogenen Mediums kühlt das umgebende Zugabewasser ab und sorgt gleichzeitig für eine Strömung im Flüssigkeitsbad. Die Mittel zum Verhindern der Rückströmung sollen im Falle einer Betriebspause oder eines verminderten Eintrags von kryogenem Medium in das Flüssigkeitsbad eine Vereisung der Eintragseinrichtung oder der Zuleitung vermeiden. Die Wahl der der Mittel zum Verhindern einer Rückströmung des Zugabewassers hängen insbesondere von der Druckdifferenz zwischen dem Druck des kryogenen Mediums in der Zuführung und dem hydrostatischen Druck des Zugabewassers im Behälter ab.

Die Mittel zum Verhindern einer Rückströmung weisen in einer bevorzugten Ausgestaltung der Erfindung einen in der Zuleitung zur Eintragseinrichtung und/oder in einer der Eintragseinrichtung angeordneten und/oder als Eintragseinrichtung fungierenden Sinterkörper aus einem flüssigkeitsdichten, jedoch gasdurchlässigen Material auf. Der Sinterkörper verhindert das Eindringen von Zugabewasser in die Zuleitung im Falle von Betriebspausen oder einem im Vergleich zum hydrostatischen Druck im Behälter bestehenden Unterdruck in der Zuleitung. Die Eintragseinrichtung kann auch selbst als ein mit der Zuleitung für das kryogene Medium strömungsverbundener Sinterkörper ausgebildet sein, der das Einperlen zumindest von gasförmigem kryogenen Medium, wie beispielweise kaltem gasförmigem Stickstoff, in das Flüssigkeitsbad erlaubt.

Alternativ oder ergänzend dazu kommt in einer anderen vorteilhaften Ausgestaltung als Eintragseinrichtung ein rohrförmiger oder flächiger Hohlkörper zum Einsatz, der mit einer Austrittsöffnung oder einer Mehrzahl von Austrittsöffnungen zur Erzeugung von in der Flüssigkeit aufsteigenden Gasblasen ausgerüstet ist. Dabei verhindert eine separat in der Eintragseinrichtung und/oder der Zuleitung für das kryogene Medium angeordnete Rückschlagarmatur das Eindringen von Zugabewasser. Die Rückschlagarmatur ist bevorzugt so eingestellt, dass sie erst oberhalb eines vorgegebenen Überdrucks in der Zuleitung gegenüber dem hydrostatischen Druck im Behälter öffnet.

Die vorgenannten Ausgestaltungen mit Sinterkörper oder Hohlkörper eignen sich insbesondere bei einer Betriebsweise mit einer vergleichsweise geringen Druckdifferenz von beispielsweise 0,2 bar bis 2 bar zwischen dem Druck des kryogenen Mediums in der Zuführung und dem hydrostatischen Druck des Zugabewassers im Behälter.

Insbesondere bei einem im Betrieb der Vorrichtung höheren Druckdifferenz von beispielsweise zwischen 0,5 bar und 10 bar oder darüber zwischen dem Druck in der Zuleitung und dem hydrostatischem Druck im Behälter erweist sich eine Ausgestaltung der Erfindung als besonders vorteilhaft, bei der die Eintragseinrichtung mit einer selbstschließenden Eintragsdüse ausgerüstet ist, die bei Vorliegen eines vorgegebenen minimalen Überdrucks des kryogenen Mediums in der Zuleitung gegenüber dem hydrostatischen Druck des Zugabewassers im Behälter eine Strömungsverbindung für das kryogene Medium aus der Zuleitung in den Behälter öffnet, jedoch bei Unterschreiten des minimalen Überdrucks die Strömungsverbindung zwischen Zuleitung und Behälter schließt. Die Eintragsdüse erzeugt im Flüssigkeitsbad eine starke Strömung und kann im Behälter horizontal oder vertikal angeordnet sein, sodass im Behälter eine horizontale bzw. vertikale Strömung erzeugt wird.

Beispielsweise weist die Eintragsdüse dazu einen in einem Gehäuse aufgenommenen Schließkörper auf, der gegen die Wirkung einer Feder aus einem Schließzustand, in dem er auf einem Sitz des Gehäuses dichtend aufliegt, in einen Öffnungszustand bringbar ist, in der der Schließkörper einen Strömungsweg für das kryogene Medium in den Behälter freigibt. Durch die Feder wird die selbsttätige Rückführung in die Schließposition gewährleistet, wenn der Druck des kryogenen Mediums in der Zuleitung so weit absinkt, dass die auf den Schließkörper wirkende Kraft auf einen Wert unterhalb eines durch die Federspannung definierten Mindestwert absinkt.

Eine besonders vorteilhafte Ausgestaltung sieht dabei vor, dass der Schließkörper einen im Schließzustand auf einem ringförmigen Sitz des Gehäuses aufliegenden Schließteller aufweist, der in einen unter Freigabe eines Ringspalts in eine vom Sitz beabstandete Position (Öffnungszustand) bewegbar ist. Der ringförmige Sitz ist beispielsweise im Bereich der Stirnseite eines rohrförmig ausgebildeten Gehäuses angeordnet. Aus dem Ringspalt tritt das kryogene Medium als Flüssigkeitsstrahl tief in das Flüssigkeitsbad ein und sorgt so für eine intensive Durchmischung von kryogenem Medium und Zugabewasser.

Um der Gefahr einer Vereisung der Eintragsdüse zu begegnen, ist es vorteilhaft, der Eintragsdüse Strömungsmittel zuzuordnen, um durch den Eintritt des kryogenen Mediums in das Flüssigkeitsbad in das Zugabewasser zugleich eine Strömung zu erzeugen, die auf den Schließkörper und/oder auf das Gehäuse der Eintragsdüse gerichtet ist. Durch die Wirkung der Strömungsmittel wird vergleichsweise warmes Zugabewasser mit der Eintragsdüse in Kontakt gebracht, wodurch diese erwärmt und somit die Gefahr einer Vereisung vermindert wird. Die Strömungsmittel können beispielsweise einen um eine Austrittsöffnung der Eintragsdüse herum angeordneten Strömungskörper in Form eines Trichters oder Rohrs umfassen; besitzt, wie im oben genannten Beispiel, die Austrittsöffnung im Öffnungszustand der Eintragsdüse für das kryogene Medium an der Eintragsdüse die Form eines Ringspalts, aus dem das kryogene Medium in das Flüssigkeitsbad einströmt, eignet sich als Strömungskörper insbesondere ein axial vor der Austrittsöffnung angeordneter, zum Behälterinnern sich verjüngender Kegel oder glockenförmiger Rotationskörper. Dieser begünstigt die Ausbildung eines tief in das Behälterinnere hineinreichenden Strahls aus ausströmendem kryogenen Medium und mitgerissenem Zugabewasser mit der Folge, dass dem Schließkörper bzw. dem Gehäuse der Eintragsdüse beständig warmes Zugabewasser aus der Umgebung zugeführt wird.

Als Behälter kann ein offener Behälter vorgesehen sein, beispielsweise ein Becken oder ein Teich. Die Ausgestaltung des Behälters als geschlossener, mit einem an eine Gasableitung angeschlossenen Behälter ist jedoch bevorzugt, da in diesem Fall der austretende Gasfluss kontrolliert abgeführt werden kann.

In einer abermals bevorzugten Ausgestaltung der Erfindung ist in der Zuleitung ein mit dem Flüssigkeitsbad in thermischen kontakt stehender Wärmetauscher integriert. Beim Durchlaufen des Wärmetauschers erwärmt sich und/oder verdampft das kryogene Medium wodurch die Gefahr einer Vereisung weiter reduziert wird, gleichzeitig kühlt der Wärmetauscher das Flüssigkeitsbad.

Bevorzugt ist der Behälter mit Mitteln zum Regeln der Temperatur des dem Behälter entnehmbaren Zugabewassers ausgerüstet. Dabei handelt es sich beispielsweise um einen Temperaturmesser, der mit einem in einer Entnahmeleitung angeordneten Entnahmeventil in Wirkverbindung steht. Der Temperaturmesser misst kontinuierlich die Temperatur eines im Behälter vorliegenden Bades aus Zugabewasser. Bei Erreichen einer vorgegebenen Temperatur im Bad von beispielsweise zwischen 1°C und 5°C wird eine kontrollierte Abgabe von Zugabewasser über die Entnahmeleitung ermöglicht; gleichzeitig oder anschließend wird dem Behälter über eine Zuführleitung frisches Wasser zwecks Kühlung zugeführt. Im Übrigen kann die Temperatur des Zugabewassers im Behälter über eine Regelung der Menge des eingetragenen kryogenen Kühlmediums mittels eines mit einem Temperaturmesser im Behälter in Wirkverbindung stehenden, in der Zuleitung für das kryogene Medium angeordneten Ventils gesteuert werden.

Beim kryogenen Kühlmedium handelt es sich bevorzugt um flüssigen oder kalten gasförmigen Stickstoff.

Anhand der Zeichnungen sollen Ausführungsbeispiele der Erfindung näher erläutert werden. In schematischen Ansichten zeigen:
Fig. 1: Eine erfindungsgemäße Vorrichtung in einer ersten Ausführungsform,
Fig. 2: Eine erfindungsgemäße Vorrichtung in einer zweiten Ausführungsform
Fig. 3: Die Eintragseinrichtung der Vorrichtung aus Fig. 2 im Längsschnitt.

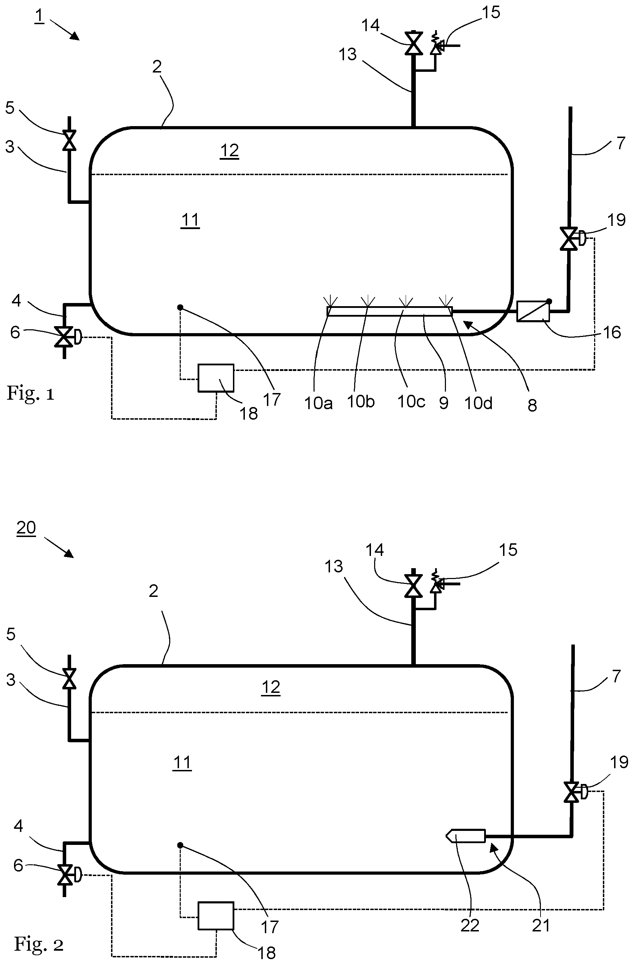

Die in Fig. 1 gezeigte erfindungsgemäße Vorrichtung 1 weist einen Behälter 2 zum Aufnehmen von Zugabewasser zur Herstellung von Frischbeton auf, der mit einer Zuleitung 3 für die Zuführung für frisches Zugabewasser und mit einer Ausleitung 4 zum Abführen von gekühltem Zugabewasser ausgerüstet ist. In der Zuleitung 3 und der Ausleitung 4 ist jeweils ein Ventil 5, 6 zum Steuern des Mengenflusses der jeweiligen Flüssigkeit vorgesehen.

In einen unteren Bereich des Behälters 2 mündet eine Zuleitung 7 für ein kryogenes Medium, beispielsweise flüssiger oder tiefkalter gasförmiger Stickstoff, an einer Eintragseinrichtung 8 ein.

Bei der Eintragseinrichtung 8 handelt es sich in dem in Fig. 1 gezeigten Ausführungsbeispiel um einen Hohlkörper 9, der mit Vielzahl von Austrittsöffnungen 10a, 10b, 10c, 10d ausgerüstet ist, durch die das kryogene Medium in das Zugabewasser eingespeist wird. Der Hohlkörper 9 kann rohrförmig ausgebildet sein oder eine sonstige Geometrie aufweisen, beispielsweise kugelförmig. Es kann sich jedoch auch um einen Sinterkörper aus Metall, Keramik oder Kunststoff handeln, der gasdurchlässig und zumindest weitgehend flüssigkeitsdicht ausgebildet ist; in diesem Falle wird das kryogene Medium als kaltes Gas zugeführt.

Im Betrieb der Vorrichtung 1 wird der Behälter 2 mit Zugabewasser bis zu einer Höhe gefüllt, bei der die Eintragseinrichtung 8 vollständig innerhalb eines Flüssigkeitsbades 11 vorliegt. Sodann wird das kryogene Medium mit einer Temperatur von beispielsweise zwischen -100°C und -196°C, über die Zuleitung 7 zur Eintragseinrichtung 8 geleitet. Das kryogene Medium tritt an den Austrittsöffnungen 10a, 10b, 10c, 10d aus der Eintragseinrichtung 8 aus. Beim Kontakt mit dem Zugabewasser erwärmt sich das kryogene Medium und steigt in Form von Gasblasen im Flüssigkeitsbad 11 auf. Gleichzeitig wird das Zugabewasser stark abgekühlt. Die aufsteigenden Gasblasen führen zu einer Strömung im Flüssigkeitsbad 11, aufgrund der der Eintragseinrichtung 8 beständig frisches Zugabewasser zur Kühlung zugeführt wird und zugleich eine intensive Durchmischung des Flüssigkeitsbades 11 erfolgt. Das der Eintragseinrichtung 8 laufend zugeführte, noch vergleichsweise warme Zugabewasser reduziert die Gefahr einer Vereisung der Austrittsöffnungen 10a, 10b, 10c, 10d.

Der verdampfte Stickstoff sammelt sich oberhalb des Flüssigkeitsbades 11 in einer Gasphase 12 in einem oberen Bereich des Behälters 2 an und wird über eine Abgasleitung 13 abgeführt. Der Stickstoff kann anschließend in die Umgebung entlassen oder einer sonstigen Verwendung zugeführt werden. Zur Kontrolle der abströmenden Gasmenge dient ein Ventil 14 mit Sicherheitsventil 15.

Um zu verhindern, dass, etwa während einer Betriebsruhe, eingedrungenes Zugabewasser nach der Wiederinbetriebnahme der Vorrichtung 1 zu unerwünschten Eisbildungen in der Zuleitung 7 führt, ist in der Zuleitung 7, stromauf zur Eintragseinrichtung 8, eine Rückschlagarmatur 16, beispielsweise eine Klappe, vorgesehen. Bei Wahl eines gasdurchlässigen, jedoch flüssigkeitsdichten Sinterkörpers als Eintragseinrichtung 8 kann auf die Rückschlagarmatur 16 jedoch auch verzichtet werden.

Die Temperatur im Flüssigkeitsbad 11 wird an einem Temperaturmesser 17, der mit einer Steuereinheit 18 wirkverbunden ist, laufend kontrolliert. Sobald eine vorgegebene Temperatur im Zugabewasser von beispielsweise zwischen 1°C und 6°C erreicht ist, kann Zugabewasser über die Ausleitung 4 entnommen und seiner beabsichtigten Verwendung zugeführt werden. Anschließend wird frisches Zugabewasser über die Zuführung 3 eingespeist. Die am Temperaturmesser 17 erfasste Temperatur kann auch dazu genutzt werden, die Menge an zugeführtem kryogenen Medium zu steuern, um die Temperatur des Flüssigkeitsbades 11 unabhängig von einer Entnahme in einem vorgegebenen Temperaturbereich zu halten. Hierzu dient ein mit der Steuereinheit 18 wirkverbundenes Ventil 19 in der Zuleitung 7.

Die in Fig. 1 gezeigte Vorrichtung 1 ist besonders dann geeignet, wenn der Druck des über die Zuleitung 7 herangeführten kryogenen Mediums mit einem vergleichsweise geringen Überdruck von 0,2 bar bis 2 bar gegenüber dem hydrostatischen Druck im Flüssigkeitsbad 11 eingetragen wird.

Die in Fig. 2 gezeigte Vorrichtung 20 unterscheidet sich von der Vorrichtung 1 aus Fig. 1 lediglich durch eine andere Eintragseinrichtung. Die übrigen Teile der Vorrichtung 20 entsprechen denen der Vorrichtung 1 und sind daher mit den gleichen Bezugszeichen gekennzeichnet.

Die Vorrichtung 20 weist eine in einem unteren Bereich des Behälters 2 angeordnete Eintragseinrichtung 21 auf, die an einer druckfesten Zuleitung 7 angeschlossen ist und mit einer hier im Wesentlichen horizontal angeordneten Eintragsdüse 22 ausgerüstet ist.

Die Eintragsdüse 22 ist als selbstschließende Düse ausgebildet, die bei Unterschreiten eines vorgegebenen Differenzdrucks zwischen dem Druck des kryogenen Mediums in der Zuleitung 7 und dem hydrostatischen Druck des Zugabewassers im Flüssigkeitsbad 11 in einen Schließzustand übergeht, der so lange anhält, bis der Differenzdruck erneut überschritten wird.

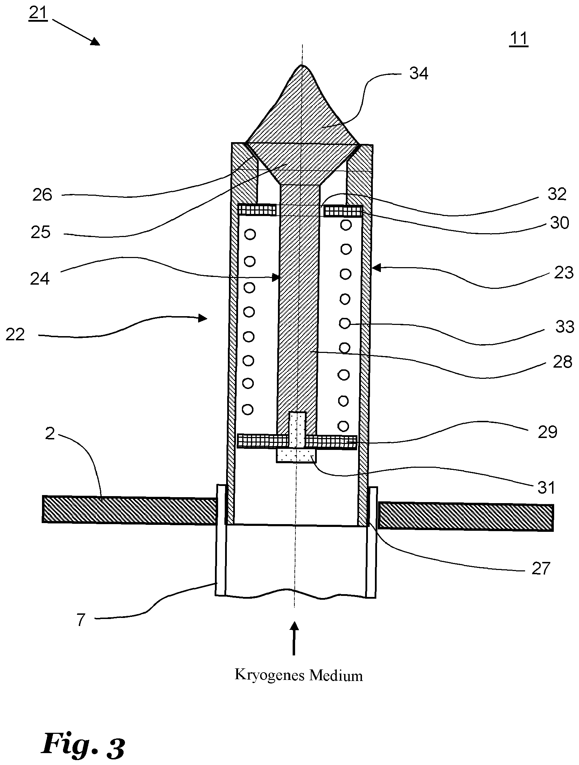

In Fig. 3 ist die Eintragseinrichtung 21 mit der Eintragsdüse 22 vergrößert dargestellt. Die Eintragsdüse 22 umfasst einen in einem Gehäuse 23 längsbeweglich aufgenommenen Schließkörper 24, der im Schließzustand der Eintragsdüse 22 (wie in Fig. 3 gezeigt) mit einem Vorderabschnitt 25 auf einem ringförmigen Sitz 26 des Gehäuses 23 dichtend aufsitzt. Das Gehäuse 23 ist in einer Wand des Behälters 2, beispielsweise durch Verschrauben, montiert und weist einen Befestigungsabschnitt 27, beispielsweise ein Schraubgewinde, zum lösbaren Anschließen der Zuleitung 7 auf. Der Schließkörper 24 umfasst einen am Vorderabschnitt 25 befestigten Schaft 28, der sich durch das Gehäuse 23 hindurcherstreckt und in radialer Richtung von zwei Zentrierscheiben 29, 30 gehalten wird, von denen die Zentrierscheibe 29 mittels Schraube 31 am Schaft 28 befestigt ist und zusammen mit dem Schließkörper 24 im Gehäuse 23 bewegt wird, während die Zentrierscheibe 30 am Gehäuse 23, beispielsweise durch Einschrauben, fixiert ist, jedoch die axiale Bewegung des Schaftes 28 durch eine zentrale Bohrung 32 hindurch erlaubt. In den Zentrierscheiben 29, 30 sind hier nicht gezeigte Strömungsöffnungen vorhanden, die ein Durchfließen von kryogenem Medium ermöglichen. Zwischen den Zentrierscheiben 29, 30 erstreckt sich, radial außenseitig am Schaft 28, eine Feder 33. Die Feder 33 befindet sich im Schließzustand der Eintragsdüse 22 bevorzugt unter Vorspannung, sodass der Vorderabschnitt 25 gegen den Sitz 26 gepresst wird, und somit ein Eindringen von Zugabewasser aus dem Flüssigkeitsbad 11 in das Gehäuse 23 oder die Zuleitung 7 sicher vermieden wird.

Bei Vorhandensein eines gewissen, die Vorspannung der Feder 33 überwindenden minimalen Überdrucks von beispielsweise 0,5 bar oder mehr in der Zuleitung 7 gegenüber dem hydrostatischen Druck des Flüssigkeitsbades 11 im Behälter 2 bewegt sich der Schließkörper 24 gegen die Kraft der Feder 33 in Richtung auf das Innere des Behälters 2. Dabei öffnet sich zwischen Sitz 26 und Vorderabschnitt 25 ein Ringspalt, der das Einströmen von kryogenem Medium aus der Zuleitung 7 in das Flüssigkeitsbad 11 ermöglicht. Die Eintragsdüse 22 befindet sich somit in Öffnungsposition. Reduziert sich dagegen der Druck in der Zuleitung 7 unter den minimalen Überdruck, gelangt die Eintragsdüse 22 unter der Wirkung der Feder 33 selbsttätig zurück in ihre Schließposition.

Auf dem Vorderabschnitt 25 ist, auf dessen dem Schaft 28 gegenüberliegenden Seite, ein Strömungskörper 34 angeordnet, der die Gestalt eines sich in das Innere des Behälters 2 verjüngenden Kegels oder glockenförmigen Rotationskörpers besitzt. Befindet sich die Eintragsdüse 22 in Öffnungsposition, strömt kryogenes Kühlmedium aus der Zuleitung 7 durch den Ringspalt zwischen Sitz 26 und Vorderabschnitt 25 strahlförmig in das Flüssigkeitsbad 11 im Behälter 2 ein, reißt dabei umgebendes Zugabewasser mit sich und vermischt sich innig mit diesem. Dadurch entsteht im Flüssigkeitsbad 11 eine radial auf die Eintragsdüse 22 zu gerichtete Strömung aus ungekühltem Zugabewasser, die durch den Strömungskörper 34 in Richtung des Innern des Behälters 2 abgelenkt wird. Das dabei am Strömungskörper 34 entlang strömende, vergleichsweise warme Zugabewasser erwärmt den Vorderabschnitt 25 insgesamt und verhindert dadurch eine Eisbildung im Bereich der Eintragsdüse 22.

Bei den Vorrichtungen 1, 20 wird ein Rückfluss von Zugabewasser aus dem Flüssigkeitsbad 11 in die Zuleitung 7 wirkungsvoll verhindert. Es kommt damit nicht zur Bildung von Wassereis innerhalb der Zuleitung 7 oder in der Eintragseinrichtung 8, 21, die die Funktionsfähigkeit der Vorrichtung 1, 20 beeinträchtigen könnte.

**Bezugszeichenliste**

| | | | |
|---|---|---|---|
| 1 | Vorrichtung | 18 | Steuereinheit |
| 2 | Behälter | 19 | Ventil |
| 3 | Zuleitung | 20 | Vorrichtung |
| 4 | Ausleitung | 21 | Eintragseinrichtung |
| 5 | Ventil | 22 | Eintragsdüse |
| 6 | Ventil | 23 | Gehäuse |
| 7 | Zuleitung für kryogenes Medium | 24 | Schließkörper |
| 8 | Eintragseinrichtung | 25 | Vorderabschnitt |
| 9 | Hohlkörper | 26 | Sitz |
| 10a, 10b, 10c, 10d | Austrittsöffnungen | 27 | Befestigungsabschnitt |
| 11 | Flüssigkeitsbad | 28 | Schaft |
| 12 | Gasphase | 29 | Zentrierscheibe |
| 13 | Abgasleitung | 30 | Zentrierscheibe |
| 14 | Ventil | 31 | Schraube |
| 15 | Sicherheitsventil | 32 | Bohrung |
| 16 | Rückschlagarmatur | 33 | Feder |
| 17 | Temperaturmesser | 34 | Strömungskörper |

## Patentansprüche

1. Vorrichtung zum Kühlen von Zugabewasser für die Herstellung von Frischbeton, mit einem Behälter (2) zum Aufnehmen eines aus Zugabewasser bestehenden Flüssigkeitsbades (11) und mit einer Zuleitung (7) für ein kryogenes Medium, die mit einer in das Flüssigkeitsbad (11) im Behälter (2) einmündenden Eintragseinrichtung (8, 21) strömungsverbunden ist,
**dadurch gekennzeichnet,**
**dass** die Zuleitung für das kryogene Medium und/oder die Eintragseinrichtung (8, 21) mit Mitteln (16, 4) zum Verhindern einer Rückströmung von Zugabewasser aus dem Flüssigkeitsbad (11) in die Zuleitung (7) ausgerüstet ist.

2. Vorrichtung nach Anspruch 1, **dadurch gekennzeichnet, dass** die Mittel (4, 16) zum Verhindern einer Rückströmung einen in der Zuleitung (7) und/oder der Eintragseinrichtung (8, 21) angeordneten und/oder als Eintragseinrichtung (8, 21) fungierenden Sinterkörper aus einem flüssigkeitsdichten, jedoch gasdurchlässigen Material umfassen.

3. Vorrichtung nach Anspruch 1 oder 2, **dadurch gekennzeichnet, dass** die Eintragseinrichtung (8, 21) einen mit einer Austrittsöffnung oder einer Mehrzahl von Austrittsöffnungen zur Erzeugung von in der Flüssigkeit aufsteigenden Gasblasen ausgerüsteten, rohrförmigen oder flächigen Hohlkörper (9) umfassen, der zum Verhindern einer Rückströmung von Zugabewasser mit einer Rückschlagarmatur (16) ausgerüstet ist.

4. Vorrichtung nach einem der vorhergehenden Ansprüche, **dadurch gekennzeichnet, dass** die Eintragseinrichtung (8, 21) eine selbstschließende Eintragsdüse (22) aufweist, die bei Vorliegen eines vorgegebenen minimalen Überdrucks in der Zuleitung (7) gegenüber dem hydrostatischen Druck im Behälter (2) eine Strömungsverbindung für das kryogene Medium aus der Zuleitung (7) in den Behälter (2) öffnet, jedoch bei Unterschreiten des minimalen Überdrucks die Strömungsverbindung zwischen Zuleitung (7) und Behälter (2) schließt.

5. Vorrichtung nach Anspruch 4, **dadurch gekennzeichnet, dass** die Eintragsdüse (22) einen in einem Gehäuse (23) aufgenommenen Schließkörper (24) umfasst, der gegen die Wirkung einer Feder (33) aus einem Schließzustand, in dem er auf einem Sitz des Gehäuses (23) dichtend aufliegt, in einen Öffnungszustand bringbar ist, in der der Schließkörper (24) einen Strömungsweg für das kryogene Medium in den Behälter freigibt.

6. Vorrichtung nach Anspruch 5, **dadurch gekennzeichnet, dass** der Eintragsdüse (22) Strömungsmittel (34) zugeordnet sind, um eine beim Eintritt des kryogenen Mediums in das Flüssigkeitsbad (11) im Zugabewasser erzeugte Strömung in Richtung auf den Schließkörper (24) und/oder das Gehäuse (23) der Eintragsdüse (22) zu lenken

7. Vorrichtung nach einem der vorhergehenden Ansprüche, **dadurch gekennzeichnet, dass** der Behälter (2) als geschlossener Behälter ausgebildet ist, der mit einer aus einem oberen Bereich des Behälters (2) ausmündenden Abgasleitung (13) ausgerüstet ist.

8. Vorrichtung nach einem der vorhergehenden Ansprüche, **dadurch gekennzeichnet, dass** in der Zuleitung (7) ein mit dem Flüssigkeitsbad (11) in thermischen Kontakt stehender Wärmetauscher integriert ist.

9. Vorrichtung nach einem der vorhergehenden Ansprüche, **dadurch gekennzeichnet, dass** der Behälter (2) mit Mitteln (6, 17, 18, 19) zum Regeln der Temperatur des dem Behälter (2) entnehmbaren Zugabewassers ausgerüstet ist.

10. Vorrichtung nach einem der vorhergehenden Ansprüche, **dadurch gekennzeichnet, dass** als kryogenes Medium flüssiger oder kalter gasförmiger Stickstoff zum Einsatz kommt.
